# EUROPÄISCHE PATENTSCHRIFT

(11) **EP 2 143 618 B1**
(45) Veröffentlichungstag und Bekanntmachung des Hinweises auf die Patenterteilung: **28.03.2018**
(21) Anmeldenummer: 08012472.0
(22) Anmeldetag: 10.07.2008
(51) Int. Cl.: B62D 15/02

(54) **Verfahren zur Steuerung eines Parkassistenzsystems für Fahrzeuge**
Method for controlling a parking assistance system for vehicles
Procédé destiné à la commande d'un système d'assistance au stationnement pour véhicules

(43) Veröffentlichungstag der Anmeldung: 13.01.2010
(73) Patentinhaber: Valeo Schalter und Sensoren GmbH, 74321 Bietigheim-Bissingen (DE)
(72) Erfinder: Gotzig, Heinrich, 74081 Heilbronn (DE); Klaudija, Jäger, 74343 Sersheim (DE)

(56) Entgegenhaltungen:
- EP-A- 1 468 893
- EP-A2- 2 090 498
- DE-A1- 10 041 381
- DE-A1-102005 046 827
- DE-A1-102006 035 376
- DE-A1-102007 027 438

## Beschreibung

### Stand der Technik

Die Erfindung betrifft ein Verfahren zur Steuerung eines Parkassistenzsystems für Fahrzeuge, die insbesondere in seitlich parallel zueinander liegenden Abstellflächen oder seitlich parallel zu sonstigen Begrenzungen abgestellt werden, nach der Gattung des Hauptanspruchs.

Es ist beispielsweise aus der DE 10 2005 028 956 A1 ein Hilfssystem zum Parken von Fahrzeugen bekannt, bei dem Informationsdaten über Hindernisse oder Abstellflächenbegrenzungen mit Ultraschallsensoren an den zu parkenden oder abzustellenden Fahrzeug gewonnen werden. Die Hindernissinformationen werden erzeugt, während das zu abzustellende Fahrzeug in der Nähe des Abstellbereichs, bzw. am Abstellbereich vorbeibewegt wird und dann wird mittels einer computergesteuerten Auswertung ein sogenannter Näheplan über die Nachbarschaft der Zielparkzone ermittelt.

Zur Gewinnung der notwendigen Informationen werden beim Stand der Technik Abstandsdaten zu Hindernissen, z.B. mit den Ultraschallsensoren, im Umgebungsbereich des Fahrzeugs, Geschwindigkeitsdaten, z.B. aus dem Antriebssystem oder aus entsprechenden Sensoren am Fahrzeug, Lenkwinkel- und Getriebestellungen ebenfalls aus einer entsprechend in den meisten Fahrzeugen üblicherweise auch für andere Steuerungsvorgänge eingesetzten Sensorik und auch Bilddaten aus den Umgebungsbereich aufnehmenden Kameras ausgewertet.

Entsprechende Steuersignale für das Hilfssystem zum Parken werden dann nach der erfolgten Auswertung an eine Lenkunterstützungs- und/oder Geschwindigkeitsautomatik im Fahrzeug weitergeleitet. Ferner werden beim Stand der Technik auch Anzeigemittel für den Fahrer des Fahrzeugs oder auch Eingabemittel für einen eventuell notwendigen Eingriff des Fahrers in den Ablauf des Park- oder Abstellvorgangs eingesetzt.

Für sich gesehen ist auch noch aus der DE 10 2004 029 038 A1 oder aus der DE 2004 055 372 A1 bekannt, wie geeignete Ultraschallsensoren am Fahrzeug angebracht werden können und wie die Einzelsensoren mit einem im wesentlichen kreisförmigen Abstandsquerschnitt die Umgebung auch hinsichtlich der Bordsteinkanten einer Fahrbahn oder sonstiger Hindernisse abtasten können. Im Anwendungsfall eines solchen Hilfssystems zum Parken oder Abstellen eines Fahrzeugs fährt ein Fahrer lediglich in eine, insbesondere oft seitlich begrenzte Abstellfläche, z.B. eine relativ enge Parklücke auf einem Parkgelände oder in einer Garage. Dies kann eventuell dazu führen, dass sich das Fahrzeug nach dem Abstellen in einer ungünstigen Position in der Abstellfläche befindet und dadurch wertvoller Platz zum Beispiel in der Garage verschenkt wird. Es kann aber auch sein, dass sich das Fahrzeug zu nah an einem der Abstellfläche benachbarten Fahrzeug befindet, was in der Folge auch zu Beschädigungen des eigenen Fahrzeuges resultieren kann wenn in das benachbarte Fahrzeug eingestiegen wird.

Aus der EP 1 468 893 A2 ist ein gattungsgemäßes Verfahren zur Steuerung eines Fahrzeugs bekannt, bei dem das Fahrzeug in einem automatischen oder semi-automatischen Einparkvorgang in ein- oder beidseitig seitlich parallel zu einem Hindernis abgestellt wird. Die Abststellposition des Fahrzeugs wird vom Fahrer über einen berührungsempfindlichen Bildschirm eingegeben. Um auch in engen Parklücken einen bequemen Ausstieg zu ermöglichen, kann der Fahrer bei Eingabe eine Korrektur vornehmen, und die Abstellposition in einem Abstand zur zentralen Abstellposition in der Parklücke festlegen.

Aus der DE 10 2005 046 827 A1 ist ein Verfahren zur Einparkunterstützung eines Fahrzeugs bekannt, bei dem bei einer teilweisen Positionierung des Fahrzeugs in einer Parklücke die Abmessungen der Parklücke sowie eine Trajektorie des Fahrzeugs zum Abschluss des Einparkvorgangs bestimmt werden. Dabei ist es vorgesehen, dass der Fahrer den am Ende des Einparkvorgangs gewünschten Abstand des Fahrzeugs auf Fahrer und/oder Beifahrerseite zu den seitlichen Parklückenbegrenzungen vorgeben kann. Alternativ können diese Abstände auch automatisch anhand der insbesondere mittels Sitzmatten oder Kamera erkannten Fahrzeugbelegung des Fahrzeugs ermittelt werden.

### Darstellung der Erfindung

Die Erfindung geht von einem Verfahren zur Steuerung eines Parkassistenzsystems für Fahrzeuge aus, bei dem die Fahrzeuge in Fahrtrichtung ein-oder beidseitig seitlich parallel zu einem Hindernis abgestellt werden, mit einer Auswertung von Sensordaten, die die Abstände zu den Hindernissen im Bereich der Abstellfläche und die eigenen Geschwindigkeits- und/oder Lenkstellungsdaten des Fahrzeugs betreffen. Weiterhin wird eine Steuerung des Parkassistenzsystems mit den ausgewerteten Sensordaten vorgenommen, bei der erfindungsgemäß in vorteilhafter Weise bei einer automatischen, semiautomatischen oder durch den Fahrer bewirkten Erkennung einer Abstellfläche, deren optimale Abstellposition außerhalb einer zentralen Abstellposition in der Abstellfläche liegt, eine automatische, semiautomatische oder durch den Fahrer bewirkte Korrektur zu einer seitlich versetzten Abstellposition vorgenommen wird.

Somit kann gemäß der Erfindung ein Parkassistenzsystem bereitgestellt werden, dass das Fahrzeug entweder in die optimale Position oder in die vom Fahrer gewünschte Position innerhalb einer begrenzenden Abstellfläche bringt. Dies kann entweder durch Lenkhinweise erfolgen oder dadurch, dass das System selber die laterale Kontrolle über das Fahrzeug hat. Die Fahrtrichtung ist idealerweise vorwärts, wobei aber auch ein rückwärtseinparken prinzipiell möglich ist.

Das erfindungsgemäße Verfahren wird derart ausgeführt, dass Sensordaten über das Vorhandensein von Mitfahrern im Fahrzeug derart ausgewertet werden, dass in dem Fall, in dem kein Mitfahrer auf der Beifahrerseite vorn und/oder hinten vorhanden ist, der Abstand des abgestellten Fahrzeugs vom Hindernis auf dieser Seite minimiert ist.

Die Erfindung ist in vorteilhafter Weise ausführbar, wenn sich die Abstellfläche auf einer Parkfläche mit in Fahrtrichtung nebeneinander stehen Fahrzeugen befindet oder wenn die Abstellfläche einen Garagenparkplatz mit Garagenwänden als Hindernisse darstellt.

Beim erfindungsgemäßen Parkassistenzsystem ist vorgesehen, dass auf der Seite mit dem minimierten Abstand zum Hindernis ein Außenspiegel automatisch, semiautomatisch oder durch den Fahrer nach einem Hinweissignal bewirkt, vor dem Abstellvorgang eingeklappt wird.

Verfahren nach einem der vorhergehenden Ansprüche, dadurch gekennzeichnet, dass die Sensordaten fortlaufend während des Abstellvorgangs zur Bildung einer Odometriebestimmung, d.h. zur Orts- oder Lagebestimmung des Fahrzeugs hinsichtlich des abzustellenden Fahrzeugs und der Umgebung der Abstellfläche, ausgewertet werden. Ferner wird während des Abstellvorgangs fortlaufend die Trajektorie, d.h. die Bahnkurve des bewegten abzustellenden Fahrzeugs bestimmt und bei einer Änderung der Sensordaten erfolgt eine fortlaufende Korrektur der Trajektorie bzw. der Steuerdaten für das Parkassistenzsystems.

Bevorzugt kann bei einer automatischen Ausführung des Parkassistenzsystems auf einen manuellen Eingriff verzichtet werden und das Fahrzeug ist damit fahrerlos in die Abstellfläche hinein- und/oder herausführbar. Hierbei kann das automatische Herausfahren des Fahrzeugs auf einfache Weise unter Auswertung der beim Abstellvorgang gespeicherten Odometrie- und Steuerdaten durchgeführt werden.

Es ist aber auch möglich, dass bei einer semiautomatischen Ausführung des Parkassistenzsystems ein manueller Eingriff lediglich hinsichtlich der Steuerung der Geschwindigkeit des Fahrzeug durchführbar ist, wobei das Herausfahren ansonsten auch hier unter Auswertung der beim Abstellvorgang gespeicherten Odometrie- und Steuerdaten durchgeführt wird.

Bei der automatischen oder semiautomatischen Ausführung des Parkassistenzsystems zum Start des Herein- und/oder Herausfahrens des Fahrzeugs kann in vorteilhafter Weise ein Fernsteuersignal, beispielsweise in Funksignal, erzeugt werden, wobei dann bei der semiautomatischen Ausführung des Parkassistenzsystems zur Geschwindigkeitssteuerung ebenfalls ein Fernsteuersignal erzeugt werden sollte.

### Kurze Beschreibung der Zeichnung

Ausführungsbeispiele der Erfindung werden anhand der Figur der Zeichnung erläutert. Es zeigt:

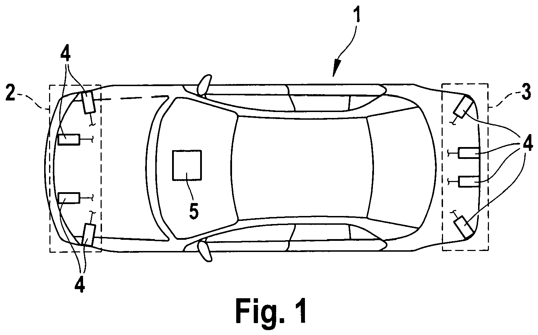

Figur 1 zeigt eine schematische Ansicht eines Fahrzeugs mit Abstandssensoren nach dem Stand der Technik,

### Wege zur Ausführung der Erfindung

Aus Figur 1 ist ein Fahrzeug 1 zu entnehmen, das in der Nähe von hier nicht näher gezeigten Hindernissen abgestellt werden soll. Aus dem eingangs erwähnten Stand der Technik DE 10 2004 029 038 A1 ist hierzu bekannt, dass jeweils eine Detektoranordnung 2 an der Vorderseite und eine Detektoranordnung 3 an der Hinterseite des Fahrzeugs 1 mit Sensoren 4, beispielsweise Ultraschallsender und -empfänger, angebracht ist. Mit den Detektoranordnungen 2 und 3 sollen Abstandswerte zu den Hindernissen bei einem Park- oder Abstellvorgang erfasst werden.

Im in der Figur 1 dargestellten Fall sind am Fahrzeug 1 für die Überwachung der in einem Rechtsverkehr kritischen rechten Seite zusätzliche Sensoren 4 angebracht die insbesondere Abstandswerte auf der rechten Seite detektieren sollen.

Die Sensoren 4 der Detektoranordnungen 2 und 3 sind über entsprechende Kommunikationskanäle (z.B. CAN-Bus) mit einer in der Regel computergesteuerten Auswerteeinheit im Fahrzeug 1 verbunden, die aus den Abstandsdaten der Sensoren 4 und den fahrzeugspezifischen Daten, wie zum Beispiel Geschwindigkeit und Lenkwinkel, ein Parkassistenzsystems für das Fahrzeug 1 bereitstellt, mit dem der zuvor erwähnte Park- oder Abstellvorgang in der nachfolgend erläuterten Weise durchführbar oder unterstützbar ist.

Mit der Erfindung kann ein Parkassistenzsystem realisiert werden, mit dem das Fahrzeug 1 entweder in die optimale Position innerhalb einer begrenzenden Abstellfläche oder in die vom Fahrer gewünschte Position bringt. Dies kann beispielsweise entweder durch entsprechende Lenkhinweise an den Fahrer (semiautomatisch oder manuell) oder dadurch erfolgen, dass das Parkassistenzsystems selber die laterale Kontrolle über das Fahrzeug 1 erhält (automatisch).

Das Prinzip der hier vorgestellten Lösung besteht darin, dass der Fahrer zunächst das Parkassistenzsystems aktiviert. Die Aktivierung sollte dabei so erfolgen, dass die Umfelderkennungssensorik mit den Detektoranordnungen nach der Figur 1 noch ausreichende Daten der Umgehung aufnehmen kann. Diese ist aber keine zwingende Bedingung, da man auch voraussetzen kann, dass der Fahrer das Fahrzeug 1 so vor der Abstellfläche platziert, dass das Parkassistenzsystem den Abstellvorgang auf jeden Fall erfolgreich durchführen kann. Die Aktivierung kann dabei durch einen Schalter, verbal durch den Fahrer oder durch eine vergleichbare Initiierungsprozedur erfolgen.

Der Fahrer kann sich bei der hier vorgestellten Lösung sowohl vorwärts als auch rückwärts der Abstellfläche nähern. Im Folgenden soll das Prinzip des hier gezeigten Ausführungsbeispiels anhand von zwei möglichen Beispielen erklärt werden, wobei jedoch weitere ähnlich gelagerte Fälle auch möglich sind.

Es steht das abzustellende Fahrzeug 1 vor einer Abstellfläche und das Fahrzeug 1 soll sich nach dem Abstellen oder Einparken optimal für den Fahrer des Fahrzeugs 1 in der Abstellfläche befinden, so dass abhängig von der Belegung des Fahrzeugs 1 entsprechend Platz zu den links und rechts parkenden Fahrzeugen besteht.

Hierbei wird nun unterschieden, ob nur auf der Fahrerseite Personen aussteigen oder auf beiden Seiten. Entweder ist hierzu eine entsprechende Sensorik im Fahrzeug 1 vorhanden, welche eine Beladung mit Personen auf der Beifahrerseite erkennt oder der Fahrer teilt dies dem Parkassistenzsystem mit und es kann eine entsprechende Optimierung des Einparkens bzw. der Abstellposition vorgenommen werden.

Der eigentliche Abstell- oder Einparkvorgang erfolgt nun beispielsweise semiautomatisch, wenn das Fahrzeug mit einer elektronisch steuerbaren Lenkung (z.B. EPS oder ähnliches) ausgestattet ist. Die von den Detektoranordnungen 2 und 3 am Fahrzeug 1 zum Beispiel mit Ultraschall-, Radar, Infrarot,- oder Kamerasensoren erfassten Abstandsinformationen über die Fahrzeuge in der Nähe werden für eine Odometriebestimmung herangezogen, so dass in der Auswerteelektronik des Fahrzeugs 1 quasi ein Abbild der Parksituation aus der Vogelperspektive (Bird-Eye-View) erzeugbar ist. Die Auswerteelektronik errechnet ferner die Trajektorie des Fahrzeugs 1 und korrigiert dies fortlaufend abhängig von den detektierten Werten. Das vorgeschlagene Parkassistenzsystem dabei nicht nur semiautomatisch, wobei der Fahrer die Kontrolle über die Geschwindigkeit des Fahrzeug 1 behält, sondern auch vollautomatisch ausführbar. Dann steigt der Fahrer und alle sonstigen Insassen aus dem Fahrzeug 1 aus und nach einem Startbefehl fährt das Fahrzeug selbstständig in die Abstellfläche.

Es ist ein zweites Ausführungsbeispiel des erfindungsgemäßen Parkassistenzsystems möglich, bei dem ein Einparken des Fahrzeugs 1 in einen Garagenparkplatz durchgeführt wird. Hierbei ist es in dem Fall, dass die Beifahrerseite nicht besetzt ist, ebenfalls vorteilhaft, wenn möglichst wenig Platz verschenkt wird und das Fahrzeug 1 nach dem Einparken möglichst weit rechts an der Garagenwand steht. Optimiert werden kann das Verfahren noch dadurch, dass ein ev. vorhandener Außenspiegel auf der rechten Seite des Fahrzeugs 1 eingeklappt wird. Vorteilhaft ist hierbei vor allem auch, dass dann Gegenstände aus dem hinteren Teil der Garage leichter an der linken Seite des Fahrzeugs 1 vorbei nach vorn transportiert werden können.

Die Durchführung des Verfahrens entspricht hierbei im Wesentlichen dem zuvor beschrieben Verfahren. Bei beiden Ausführungsbeispielen kann das Herausfahren oder Ausparken aus der Abstellflächen oder der Garage dadurch bewerkstelligt werden, dass die Auswerteelektronik die Werte der Odometriebestimmung und der Trajektorie beim Hineinfahren oder Einparken gespeichert hat, so dass dann das Ausparken sogar automatisch unter Verarbeitung dieser Werte erfolgen kann.

Der Fahrer aktiviert dazu beispielsweise das Fahrzeug 1 über Funk und das Fahrzeug 1 sucht dann automatisch seinen Weg wieder zurück, den es beim Hineinfahren benutzt hat. Im Fall, dass hierbei lageveränderte Hindernisse oberhalb einer vorgegebenen Toleranz auftreten, kann dann beispielsweise das automatische Herausfahren deaktiviert werden und eine semiautomatische oder manuelle Weiterführung des Verfahrens aktiviert werden.

## Patentansprüche

1. Verfahren zur Steuerung eines Parkassistenzsystems für Fahrzeuge (1), die insbesondere in Fahrtrichtung ein-oder beidseitig seitlich parallel zu einem Hindernis abgestellt werden, mit einer Auswertung von Sensordaten, die die Abstände zu den Hindernissen im Bereich der Abstellfläche und die eigenen Geschwindigkeits- und/oder Lenkstellungsdaten des Fahrzeugs (1) betreffen und mit einer Steuerung des Parkassistenzsystems mit den ausgewerteten Sensordaten, wobei bei einer automatischen, semiautomatischen oder durch den Fahrer bewirkten Erkennung einer Abstellfläche, deren optimale Abstellposition außerhalb einer zentralen Abstellposition in der Abstellfläche liegt, eine automatische, semiautomatische oder durch den Fahrer bewirkte Korrektur zu einer seitlich versetzten Abstellposition vorgenommen wird, **dadurch gekennzeichnet, dass** Sensordaten über das Vorhandensein von Mitfahrern im Fahrzeug (1) derart ausgewertet werden, dass im dem Fall in dem kein Mitfahrer auf der Beifahrerseite vorn und/oder hinten vorhanden ist, der Abstand des abgestellten Fahrzeugs (1) vom Hindernis auf dieser Seite minimiert ist wobei auf der Seite mit dem minimierten Abstand zum Hindernis ein Außenspiegel automatisch, semiautomatisch oder durch den Fahrer nach einem Hinweissignal bewirkt, vor dem Abstellvorgang eingeklappt wird.

2. Verfahren nach Anspruch 1, **dadurch gekennzeichnet, dass** die Abstellfläche eine Parkfläche mit in Fahrtrichtung nebeneinander stehen Fahrzeugen darstellt.

3. Verfahren nach Anspruch 1, **dadurch gekennzeichnet, dass** die Abstellfläche einen Garagenparkplatz mit Garagenwänden als Hindernissen darstellt.

4. Verfahren nach einem der vorhergehenden Ansprüche, **dadurch gekennzeichnet, dass** die Sensordaten fortlaufend während des Abstellvorgangs zur Bildung einer Odometriebestimmung hinsichtlich des abzustellenden Fahrzeugs (1) und der Umgebung der Abstellfläche ausgewertet werden, dass während des Abstellvorgangs fortlaufend die Trajektorie des anzustellenden Fahrzeugs (1) bestimmt und dass bei einer Änderung der Sensordaten eine fortlaufende Korrektur der Steuerdaten für das Parkassistenzsystems erfolgt.

5. Verfahren nach einem der vorhergehenden Ansprüche, **dadurch gekennzeichnet, dass** bei einer automatischen Ausführung des Parkassistenzsystems kein manueller Eingriff erfolgt und das Fahrzeug (1) fahrerlos in die Abstellfläche hinein und herausfahrbar ist, wobei das Herausfahren unter Auswertung der beim Abstellvorgang gespeicherten Odometrie- und Steuerdaten durchgeführt wird.

6. Verfahren nach einem der Anspruch4, **dadurch gekennzeichnet, dass** bei einer semiautomatischen Ausführung des Parkassistenzsystems ein manueller Eingriff hinsichtlich der Steuerung der Geschwindigkeit des Fahrzeug (1) durchführbar ist, wobei das Herausfahren ansonsten unter Auswertung der beim Abstellvorgang gespeicherten Odometrie- und Steuerdaten durchgeführt wird.

7. Verfahren nach Anspruch 5 oder 6, **dadurch gekennzeichnet, dass** bei der automatischen oder semiautomatischen Ausführung des Parkassistenzsystems zum Start des Herein- und/oder Herausfahrens des Fahrzeugs (1) ein Fernsteuersignal erzeugt wird, wobei bei der semiautomatischen Ausführung des Parkassistenzsystems zur Geschwindigkeitssteuerung ebenfalls ein Fernsteuersignal erzeugbar ist.

## Claims

1. Method for controlling a parking assistance system for vehicles (1) which, in particular, are parked laterally parallel to an obstacle on one or both sides in the direction of travel, with evaluation of sensor data relating to the distances to the obstacles in the region of the parking space and relating to the vehicle's (1) own speed and/or steering position data, and with control of the parking assistance system using the evaluated sensor data, wherein, if a parking space, the optimum parking position of which is outside a central parking position in the parking space, is detected automatically, semi-automatically or by the driver, correction to a laterally offset parking position is carried out automatically, semi-automatically or by the driver, **characterized in that** sensor data relating to the presence of passengers in the vehicle (1) are evaluated in such a manner that, if there is no passenger on the passenger side at the front and/or at the rear, the distance between the parked vehicle (1) and the obstacle is minimized on this side, wherein an exterior mirror is swung in automatically, semi-automatically or by the driver after a warning signal before the parking operation on the side with the minimized distance to the obstacle.

2. Method according to Claim 1, **characterized in that** the parking space is a parking area with vehicles beside one another in the direction of travel.

3. Method according to Claim 1, **characterized in that** the parking space is a garage parking space with garage walls as obstacles.

4. Method according to one of the preceding claims, **characterized in that** the sensor data are continuously evaluated during the parking operation in order to form an odometry determination with regard to the vehicle (1) to be parked and the environment of the parking space, **in that** the trajectory of the vehicle (1) to be parked is continuously determined during the parking operation, and **in that** the control data for the parking assistance system are continuously corrected in the event of a change in the sensor data.

5. Method according to one of the preceding claims, **characterized in that**, if the parking assistance system has an automatic design, no manual intervention is carried out and the vehicle (1) can be driven into the parking space and out of the parking space in a driverless manner, the vehicle being driven out of the parking space while evaluating the odometry and control data stored during the parking operation.

6. Method according to Claim 4, **characterized in that**, if the parking assistance system has a semi-automatic design, manual intervention with regard to the control of the speed of the vehicle (1) can be carried out, the vehicle otherwise being driven out of the parking space while evaluating the odometry and control data stored during the parking operation.

7. Method according to Claim 5 or 6, **characterized in that**, if the parking assistance system has an automatic or semi-automatic design, a remote control signal is generated in order to start the operation of driving the vehicle (1) into and/or out of the parking space, a remote control signal likewise being able to be generated for speed control if the parking assistance system has a semi-automatic design.

## Revendications

1. Procédé de commande d'un système d'aide au stationnement pour des véhicules (1) qui sont stationnés latéralement parallèlement à un obstacle d'un ou des deux côtés, en particulier dans le sens de la marche, consistant à évaluer des données de capteur concernant les distances par rapport aux obstacles dans la zone de l'aire de stationnement et des données propres de vitesse et/ou de braquage du véhicule (1) et consistant à commander le système d'aide au stationnement au moyen des données de capteur évaluées, dans lequel, lors d'une détection automatique, semi-automatique ou induite par le conducteur d'une aire de stationnement dont la position de stationnement optimale se trouve en dehors d'une position centrale de stationnement dans l'aire de stationnement, une correction automatique, semi-automatique ou induite par le conducteur vers une position de stationnement décalée latéralement est effectuée,
**caractérisé en ce que** des données de capteur relatives à la présence de passagers dans le véhicule (1) sont évaluées de manière à ce que, dans le cas où aucun passager n'est présent du côté passager avant et/ou arrière, la distance du véhicule (1) stationné par rapport à l'obstacle soit réduite au minimum de ce côté, dans lequel, du côté présentant la distance minimale par rapport à l'obstacle, avant le processus de stationnement, un rétroviseur extérieur est replié automatiquement, semi-automatiquement ou induite par le conducteur suite à un signal d'avertissement.

2. Procédé selon la revendication 1, **caractérisé en ce que** l'aire de stationnement représente un emplacement de stationnement comportant des véhicules placés côte à côte dans le sens de la marche.

3. Procédé selon la revendication 1, **caractérisé en ce que** l'aire de stationnement représente un emplacement de stationnement de garage comportant des murs de garage en tant qu'obstacles.

4. Procédé selon l'une des revendications précédentes, **caractérisé en ce que** les données de capteur sont évaluées en continu pendant le processus de stationnement pour établir une détermination d'odométrie concernant le véhicule (1) devant être stationné et le voisinage de l'aire de stationnement, **en ce que**, pendant le processus de stationnement, la trajectoire du véhicule (1) devant être stationné est déterminée en continu et **en ce que** lors d'une modification des données de capteur, une correction continue des données de commande du système d'aide au stationnement est effectuée.

5. Procédé selon l'une quelconque des revendications précédentes, **caractérisé en ce que**, lors d'une mise en oeuvre automatique du système d'aide au stationnement, aucune intervention manuelle n'est effectuée et le véhicule (1) peut entrer et sortir de l'aire de stationnement sans conducteur, dans lequel la sortie est effectuée en évaluant les données d'odométrie et de commande enregistrées lors du processus de stationnement.

6. Procédé selon la revendication 4, **caractérisé en ce que**, lors d'une mise en oeuvre semi-automatique du système d'aide au stationnement, une intervention manuelle peut être effectuée en ce qui concerne la commande de la vitesse du véhicule (1), dans lequel la sortie est par ailleurs effectuée en évaluant les données d'odométrie et de commande enregistrées lors du processus de stationnement.

7. Procédé selon la revendication 5 ou 6, **caractérisé en ce que**, lors de la mise en oeuvre automatique ou semi-automatique du système d'aide au stationnement, un signal de commande à distance est généré pour l'entrée et/ou la sortie du véhicule (1), dans lequel un signal de commande à distance peut également être généré lors de la mise en oeuvre semi-automatique du système d'aide au stationnement à des fins de commande de la vitesse.
